# EUROPÄISCHE PATENTSCHRIFT

(11) **EP 2 891 400 B1**
(45) Veröffentlichungstag und Bekanntmachung des Hinweises auf die Patenterteilung: **14.09.2016**
(21) Anmeldenummer: 14175433.3
(22) Anmeldetag: 02.07.2014
(51) Int. Cl.: A01K 1/015

(54) **Klumpenbildendes Hygienegranulat sowie Verfahren zu dessen Herstellung**
Clump-forming hygiene granulate and method for production of the same
Granulé hygiénique formant des agglomérats et son procédé de fabrication

(30) Priorität: 06.08.2013 DE 102013013078
(43) Veröffentlichungstag der Anmeldung: 08.07.2015
(73) Patentinhaber: Xella Baustoffe GmbH, 47259 Duisburg (DE)
(72) Erfinder: Kornmayer, Ingrid Dr., 80687 München (DE); Belzer, Thomas, 56077 Koblenz (DE); Scarbath, Jens, 27356 Rotenburg (DE); Scheidemann, Thomas, 82340 Feldafing (DE); Hantschick, Henry, 03222 Lübbenau (DE); Ritter, Marion, 27356 Rotenburg(Wümme) (DE)
(74) Vertreter: Patent- und Rechtsanwälte Dr. Solf & Zapf

(56) Entgegenhaltungen:
- EP-A1- 0 716 806
- DE-A1- 19 839 240
- DE-B4-102008 048 736
- DE-C5- 19 843 887
- US-A1- 2003 148 100

## Beschreibung

Die vorliegende Erfindung betrifft ein klumpenbildendes Hygienegranulat, insbesondere eine Tierstreu, bevorzugt eine Katzenstreu, sowie ein Verfahren zu dessen Herstellung.

Bei Hygienegranulat unterscheidet man im Wesentlichen zwischen zwei verschiedenen Arten, nämlich zwischen Leichtstreus und klumpenbildenden Streus. Leichtstreus haben ein hohes Aufnahmevermögen für Flüssigkeiten, vor allem Urin, sowie eine gute Geruchsbindung bei geringer Schüttdichte. Die Konsistenz der Leichtstreu ändert sich bei Flüssigkeitsaufnahme nicht. Leichtstreus bestehen z.B. aus nicht quellfähigen, mineralischen Körnern, beispielsweise aus Porenbeton. Im Gegensatz zu Leichtstreus bilden klumpenbildende Streus mit der zugegebenen Flüssigkeit feste Agglomerate ("Klumpen"), die einzeln entnommen werden können. Dadurch sind der Materialverbrauch und die Geruchsbildung geringer. Als klumpenbildende Materialien werden vor allem quellfähige Tonminerale, insbesondere Bentonit, und/oder Hydrokolloide verwendet. Aufgrund dessen weisen klumpenbildende Streus in der Regel eine höhere Schüttdichte auf und sind teurer als Leichtstreu. Um die Schüttdichte von klumpenbildenden Hygienegranulaten zu verringern ist es zudem bekannt, Granalien zu verwenden, die aus einem Kern aus nicht quellfähigem Material, z.B. Porenbeton, bestehen, welcher eine Ummantelung aus klumpenbildendem Material aufweist.

Aus der DE 198 39 240 A1 geht beispielsweise ein Hygienegranulat hervor, das Granalien aufweist, die jeweils einen Kern aus Calciumsilikathydratmaterial aufweisen, der eine Oberflächenbeschichtung aus einer bei Feuchtigkeitszutritt quellfähigen und klebenden Substanz aufweist. Bei diesem Material handelt es sich beispielsweise um Methylcellulose oder Carboxymethylcellulose. Zur Herstellung des Hygienegranulats wird auf die feuchten Kerne aus Calciumsilikathydratmaterial eine dünne Beschichtung aus der trockenen, bei Feuchtigkeitszutritt quellfähigen und klebenden Substanz aufgepudert.

Die DE 198 43 887 C5 offenbart ein Hygienegranulat auf Basis von Calciumsilikathydrat und Bentonit, welches pelletierte Granalien mit einem zweischichtigen Aufbau mit einem Kern aus einem Primärpellet und einem Mantel aufweist. Der Kern besteht aus einer Mischung von 85 bis 95 M-% Calciumsilikathydratmaterial und 5 bis 15 M-% feinteiligem Bentonit und der Mantel weist ein Gemisch aus feinteiligem quellfähigem Tonmineral und feinteiligem Calciumsilikathydrat auf. Dabei weist die Mischung 35-65 M-% Calciumsilikathydratmaterial und 65-35 M-% Bentonit auf und das feinteilige Calciumsilikathydratmaterial weist Korngrößen von 1 bis 100 µm auf. Das Primärpellet weist Korngrößen von 0,5-3,5 mm und die Granalien des Granulats weisen Korngrößen von 2-5 mm auf.

Die DE 10 2008 048 736 B4 offenbart eine Tierstreu aus einem porösen Trägermaterial, das mit einem Tonmineral überzogen ist, wobei zwischen dem Trägermaterial und dem Tonmineral eine Schicht eines nicht-ionischen Hydrokolloids vorhanden ist. Die Herstellung der Tierstreu erfolgt durch Anfeuchten des Trägermaterials mit einer wässrigen Lösung, die nicht-ionisches Hydrokolloid enthält und Vermischen des angefeuchteten Trägermaterials mit Tonmineral. Anschließend wird die erhaltene Mischung getrocknet. Die Tierstreu der DE 10 2008 048 736 B4 bildet zwar bei pH=6 feste Klumpen, bei anderen pH-Werten sind die Klumpen allerdings sehr klebrig und schmierig. Der pH-Wert des Katzenurins kann aber, z.B. aufgrund von Krankheiten variieren. Dann besteht die Gefahr, dass die klebrigen Klumpen im Fell der Tiere hängen bleiben.

Aufgabe der vorliegenden Erfindung ist die Bereitstellung eines klumpenbildenden Hygienegranulats, insbesondere einer Tierstreu, bevorzugt einer Katzenstreu, mit geringer Schüttdichte, die bei Zutritt von Feuchtigkeit, insbesondere von Urin, feste Klumpen bildet. Zugleich soll die Klebrigkeit der Klumpen aber nicht zu groß sein. Außerdem soll das Hygienegranulat ein hohes Feuchtigkeitsaufnahme- und rückhaltevermögen haben.

Weitere Aufgabe ist die Bereitstellung eines Verfahrens zur Herstellung eines derartigen Hygienegranulats.

Diese Aufgaben werden durch ein Hygienegranulat mit den Merkmalen von Anspruch 1 sowie ein Verfahren mit den Merkmalen von Anspruch 16 gelöst. Vorteilhafte Weiterbildungen der Erfindung sind in den sich anschließenden Unteransprüchen gekennzeichnet.

Im Folgenden wird die Erfindung anhand einer Zeichnung bespielhaft näher erläutert. Es zeigt:
Figur 1: Schematisch eine Granalie des erfindungsgemäßen Hygienegranulats im Querschnitt
Figur 2: Schematisch eine Granalie des erfindungsgemäßen Hygienegranulats im Querschnitt nach einer weiteren Ausführungsform

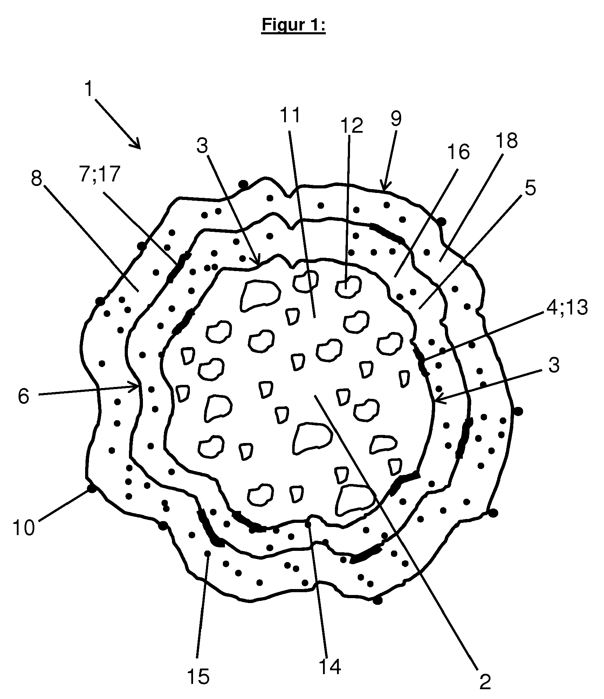

Das erfindungsgemäße Hygienegranulat weist eine Vielzahl von einzelnen Granalien 1 (Fig. 1) auf. Eine Granalie 1 weist dabei jeweils einen inneren Kern bzw. ein inneres Trägerkorn 2 aus einem porösen, mineralischen, nicht quellenden Trägermaterial mit einer äußeren Kornoberfläche 3 und eine das Trägerkorn 2 vollständig umhüllende, mehrschichtige Ummantelung auf. Eine Granalie 1 weist auf der Kornoberfläche 3 verteilt angeordneten, feinteiligen Bentonit 4, eine das Trägerkorn 2 ummantelnde Zwischenschicht 5 mit einer Zwischenschichtoberfläche 6, auf der Zwischenschichtoberfläche 6 angeordnetes Hydrokolloidgel 7 sowie eine die Zwischenschicht 5 umhüllende Außenmantelschicht 8 mit einer Mantelschichtoberfläche 9 und auf der Mantelschichtoberfläche 9 verteilt angeordnete Hydrokolloidkörner 10 eines Hydrokolloids auf.

Bei dem mineralischen, porösen Trägermaterial des Trägerkorns 2 handelt es sich vorzugsweise um Calciumsilikathydratmaterial, insbesondere um Porenund/oder Schaumbetonmaterial. Calciumsilikathydratmaterial ist Material, welches festigkeitsgebende Calciumsilikathydratphasen aufweist, welche eine Stegmatrix bilden. In die Stegmatrix sind Poren eingebettet und gegebenenfalls Zuschlagstoffe und/oder Zusatzstoffe. Dabei handelt es sich bei Porenbetonmaterial um ein hydrothermal gehärtetes, porosiertes Calciumsilikathydratmaterial. Es wird hergestellt aus wässrigen Mischungen aus mindestens einem mineralischen Bindemittel, welches mindestens eine im Hydrothermalprozess reaktionsfähige CaO-Komponente, z.B. Zement oder Branntkalk oder Kalkhydrat, und mindestens eine SiO₂-Komponente, z.B. Quarzmehl oder Flugasche, enthält, einem Treibmittel, insbesondere Aluminiumpulverund/oder -paste, sowie gegebenenfalls inerten Zusatz-und/oder Zuschlagstoffen. Die wässrige Mischung wird in Gießformen gegossen, auftreiben und ansteifen gelassen, gegebenenfalls geschnitten und anschließend einer Dampfhärtung unterzogen. Für die Herstellung von hydrothermal gehärtetem Schaumbetonmaterial wird anstelle des Treibmittels vorgefertigter Schaum untergemischt.

Das Trägerkorn 2 weist somit eine Stegmatrix 11 aus hauptsächlich Calciumsilikathydratphasen und in die Stegmatrix 11 eingebettete Poren 12 auf. Außerdem können weitere, an sich bekannte Zuschlagstoffe, Zusatzstoffe und/oder Zusatzmittel enthalten sein, die in der Stegmatrix 11 verteilt sind. Des Weiteren weisen die Trägerkörner 2 des erfindungsgemäßen Hygienegranulats vorzugsweise eine Korngröße ≤ 6 mm, bevorzugt ≤ 4 mm auf. Insbesondere weisen die Trägerkörner 2 des erfindungsgemäßen Hygienegranulats eine Korngrößenverteilung von 0,5 bis 6 mm, bevorzugt 1 bis 4 mm nach DIN EN 933/1 auf.

Wie bereits erläutert, ist auf der äußeren Kornoberfläche 3 feinteiliger Bentonit bzw. Bentonitmehl 4 vorhanden. Das Bentonitmehl 4 ist dabei insbesondere nicht flächendeckend angeordnet, sondern unregelmäßig über die gesamte Kornoberfläche 3 verteilt. Bevorzugt ist das Bentonitmehl 4 in Form von über die gesamte Kornoberfläche 3 verteilten, flächigen Materialansammlungen bzw. Materialanreicherungen bzw. Materialanhäufungen bzw. Materialagglomeraten bzw. Flecken 13 angeordnet. Bevorzugt ist das Bentonitmehl 4 auf der Kornoberfläche 3 verschmiert. Des Weiteren kann das Bentonitmehl 4 auch teilweise in den zur Kornoberfläche 3 hin offenen Poren 12 des Trägerkorns 2 angeordnet sein.

Vorzugsweise handelt es sich zudem bei dem Bentonit 4 um Na-Bentonit, da dieser ein besseres Quellvermögen hat. Denn Na-Ionen neigen im adsorbierten Zustand eher zur Hydratation als Ca-Ionen und ermöglichen dadurch eine größere Wasseraufnahme und Quellung. Zumindest enthält das Bentonitmehl 4 vorzugsweise hauptsächlich Na-Bentonit. Dieser Na- Bentonit kann natürlich entstanden sein oder mittels Sodazugabe hergestellt worden sein (aktvierter Bentonit). Zudem weist das Bentonitmehl 4 vorzugsweise eine Korngröße ≤200 µm, bevorzugt ≤ 100 µm, nach DIN EN 933/1 auf.

Anstelle von Bentonitmehl 4 oder zusätzlich kann auch ein Superabsorber verwendet werden. Superabsorber sind Kunststoffe, die in der Lage sind, ein Vielfaches ihres Eigengewichts an polaren Flüssigkeiten aufzusaugen. Dies sind vor allem Wasser bzw. wässrige Lösungen. Bei der Aufnahme der Flüssigkeit quillt der Superabsorber auf und bildet ein Hydrogel. Die Summe aus dem Volumen der Flüssigkeit und dem Volumen des trockenen Superabsorbers bleibt dabei gleich.

Wie bereits erläutert, umhüllt die Zwischenschicht 5 das Trägerkorn 2 und das Bentonitmehl 4 vollständig. Das Bentonitmehl 4, insbesondere die Agglomerate 13, ist bzw. sind somit zwischen dem Trägerkorn 2 und der Zwischenschicht 5 angeordnet. Die Zwischenschicht 5 selber besteht aus mehreren miteinander vermischten und agglomerierten Bestandteilen. Gemäß der Erfindung enthält die Zwischenschicht 5 ein Gemisch aus zumindest Calciumsilikathydratmehl, gelförmiger kaltwasserquellender und insbesondere auch kaltwasserlöslicher Stärke und einem von Stärke verschiedenen, ebenfalls gelförmigem, kaltwasserquellendem und insbesondere auch kaltwasserlöslichem Hydrokolloid. Vorzugsweise besteht die Zwischenschicht 5 aus diesem Gemisch.

Hydrokolloide im Sinne der Erfindung sind zumindest teilweise wasserlösliche Polysaccharide oder Proteine, die in wässrigen Systemen Gele oder viskose Lösungen bilden. Hydrokolloide können synthetisch hergestellt, natürlich oder chemisch modifiziert sein. Sie haben eine Verdickungswirkung, das heißt sie erhöhen die Viskosität der wässrigen Lösung, der sie zugesetzt werden. Die Verdickungswirkung beruht in erster Linie auf der Bindung von Wasser. Durch Entzug von ungebundenem Wasser kommt es zur Erhöhung der Viskosität. Ab einer charakteristischen Konzentration treten zu diesem Effekt auch noch Netzwerkeffekte auf, die zu einer meist überproportionalen Erhöhung der Viskosität führen. Man spricht in diesem Fall davon, dass Moleküle miteinander 'kommunizieren', d.h. verschlaufen. Beispielsweise interagieren die Moleküle der Hydrokolloide durch intermolekulare Wechselwirkungen, wie Wasserstoffbrücken, hydrophobe Wechselwirkungen oder Ionenbeziehungen miteinander. Ein Gel wird in der Regel als ein feindisperses System aus mindestens einer festen und einer flüssigen Phase definiert. Die feste Phase bildet dabei ein schwammartiges, dreidimensionales Netzwerk, dessen Poren durch eine Flüssigkeit (=Lyogel) oder ein Gas (=Xerogel) ausgefüllt sind. Ein Xerogel ist somit ein poröser Feststoff mit einer netzartigen Struktur, der aus der Trocknung eines Lyogels hervorgeht.

Das Calciumsilikathydratmehl bzw. das feinteilige Calciumsilikathydratmaterial der Zwischenschicht 5 weist einzelne Calciumsilikathydratkörner 14 auf. Die gelförmige Stärke (=Stärkegel) und das von Stärke verschiedene, gelförmige Hydrokolloid (=Hydrokolloidgel) bilden dabei eine einheitliche, insbesondere weitgehend bzw. teilweise getrocknete, Gelmasse bzw. Gelmatrix bzw. Klebematrix 16, in der die Calciumsilikathydratkörner 14 verteilt sind und in die die Calciumsilikathydratkörner 14 eingebettet sind.

Das Calciumsilikathydratmehl der Zwischenschicht 5 weist vorzugsweise eine Korngröße ≤ 1000 µm, bevorzugt ≤300 µm nach DIN EN 933/1 auf. Je feiner das Calciumsilikathydratmehl ist, desto leichter lässt sich die Zwischenschicht 5 bei der Herstellung auf das Trägerkorn 2 aufziehen. Die einzelnen Calcium-silikathydratkörner 14 bestehen aus mikroporösem Calciumsilikathydratmaterial, insbesondere aus Poren- und/oder Schaumbetonmaterial. Es liegt im Rahmen der Erfindung anstelle des Calciumsilikathydratmehls oder zusätzlich zumindest ein anderes feinteiliges, nicht quellendes, mineralisches, poröses Material, z.B. Kalksteinmehl, zu verwenden.

Bei der Stärke der Zwischenschicht 5 handelt es sich vorzugsweise um kaltwasserlösliche bzw. kaltwasserquellende Kartoffelstärke und/oder Maisstärke. Kaltwasserlösliche bzw. kaltwasserquellende Hydrokolloide bzw. Stärken lösen sich bzw. quellen bereits in kaltem Wasser bei einer Temperatur < 15°C, bevorzugt < 10°C. Stärke ist kein chemisch einheitlcher Stoff. In Pflanzen findet man sie in Form von Stärkekörnern, die sich in ihren Eigenschaften und in ihrem chemischen Aufbau oft schon in derselben Pflanze, besonders aber in verschiedenen Pflanzenarten unterscheiden. In kaltem Wasser quillt unbehandelte Stärke nur, löst sich jedoch nicht. Es bildet sich eine wasserundurchlässige Hülle an der Oberfläche der Stärkekörner. Erhitzt man eine Suspension von Stärkekörnern in Wasser allmählich, so quellen sie immer mehr, bis schließlich eine Temperatur erreicht wird, bei der die Stärke eine sehr zähe, kolloidale Lösung bildet, den sogenannten Stärkekleister. Die Temperatur, bei der diese Umwandlung der Stärke erfolgt, heißt Verkleisterungstemperatur. Zunächst wird dabei die Hülle der Stärkekörner wasserdurchlässig. Amylose und Amylopektin lagern Wasser an und quellen. Die Gelbildung setzt ein. Bei fortschreitender Gelbildung platzen die Stärkekörner auf, lösen sich also. Dies ermöglicht eine noch bessere Wasseranlagerung und Quellung. Nach und nach wird das Stärkegel voll ausgebildet. Kaltwasserlösliche bzw. kaltwasserquellende Stärke ist derart behandelt, dass die beschriebenen Lösungsprozesse bzw. Gelbildungsprozesse schon in kaltem Wasser auftreten. Beispielsweise wird die Stärke dazu sehr fein aufgemahlen, thermisch vorbehandelt oder chemisch modifiziert. Die erfindungsgemäß bevorzugte Stärke ist kaltwasserlöslich aber nicht modifiziert. Insbesondere handelt es sich um Kartoffelstärke.

Bei dem von Stärke verschiedenen kaltwasserquellenden, insbesondere kaltwasserlöslichen, Hydrokolloid handelt es sich vorzugsweise um Hydroxyethylcellulose und/oder Carboxymethylcellulose und/oder Methylhydroxyethylcellulose und/oder Xanthan. Vorzugsweise ist das Hydrokolloid zudem anquellverzögert. Anquellverzögerung bedeutet, dass nach Mischung des Verdickungsmittels mit Wasser noch eine gewisse Zeit vergeht, bis das Verdickungsmittel, dann aber möglichst schlagartig, die Viskosität des Gemisches erhöht.

Wie bereits erläutert ist auf der äußeren Zwischenschichtoberfläche 6 ein teilweise bzw. weitgehend getrocknetes Hydrokolloidgel 7 vorhanden. Das Hydrokolloidgel 7 ist dabei nicht flächendeckend angeordnet, sondern vereinzelt über die gesamte Zwischenschichtoberfläche 6 verteilt in Form von Flecken bzw. Agglomeraten 17. Insbesondere sind weniger als 50% der Zwischenschichtoberfläche 6 mit dem Hydrokolloidgel 7 bedeckt. Das Hydrokolloidgel 7 ist vorzugsweise ein Stärkegel, welches vorzugsweise aus Kartoffelstärke und/oder Maisstärke besteht. Das Hydrokolloidgel 7 kann aber auch aus Carboxymethylcellulosegel bestehen. Auch das Hydrokolloidgel 7 ist kaltwasserquellend, insbesondere kaltwasserlöslich.

Wie bereits erläutert, sind die Zwischenschicht 5 und das Hydrokolloidgel 7 vollständig von der Außenmantelschicht 8 umhüllt bzw. werden von dieser ummantelt. Infolgedessen ist das Hydrokolloidgel 7 zwischen der Zwischenschicht 5 und der Außenmantelschicht 8 angeordnet. Das Hydrokolloidgel 7 dient somit als Haftvermittler zwischen der Zwischenschicht 5 und der Außenmantelschicht 8. Die Außenmantelschicht 8 besteht ebenfalls aus zumindest zwei miteinander gemischten und agglomerierten Feststoffen. Gemäß der Erfindung enthält das Gemisch der Außenmantelschicht 8 zumindest Calcium-silikathydratmehl bzw. feinteiliges Calciumsilikathydratmaterial aus Calciumsilikathydratkörnern 15 und Bentonitmehl. Vorzugsweise besteht das Gemisch aus diesen beiden Bestandteilen. Das Bentonitmehl bildet dabei eine Bindemittelmatrix 18, in der die Calciumsilikathydratkörner 15 verteilt sind und in die die Calciumsilikathydratkörner 15 eingebettet sind.

Gegebenenfalls kann die Außenmantelschicht 8 auch noch ein kaltwasserquellendes, insbesondere kaltwasserlösliches, Hydrokolloid enthalten, welches mit dem Bentonitmehl zusammen die Bindemittelmatrix 18 ausbildet.

Das Calciumsilikathydratmehl der Außenmantelschicht 8 weist vorzugsweise eine Korngröße ≤ 1000 µm, bevorzugt ≤ 300 µm nach DIN EN 933/1 auf. Die einzelnen Calciumsilikathydratkörner 15 bestehen wiederum aus mikroporösem Calciumsilikathydratmaterial, insbesondere aus Poren- und/oder Schaumbetonmaterial. Es liegt im Rahmen der Erfindung anstelle des Calciumsilikathydratmehls oder zusätzlich zumindest ein anderes feinteiliges, nicht quellendes, mineralisches, poröses Material, z.B. Kalksteinmehl, zu verwenden.

Das Bentonitmehl bzw. der feinteilige Bentonit der Außenmantelschicht 8 weist insbesondere eine Korngröße ≤ 200 µm, bevorzugt ≤100 µm nach DIN EN 933/1 auf.

Wie bereits erläutert, sind zudem erfindungsgemäß auf der äußeren Manteloberfläche 9 Hydrokolloidkörner 10 aus einem kaltwasserquellenden und insbesondere kaltwasserlöslichen Hydrokolloid vorhanden. Die Hydrokolloidkörner 10 sind dabei nicht flächendeckend angeordnet, sondern vereinzelt über die gesamte Manteloberfläche 9 verteilt. Insbesondere sind weniger als 50% der Manteloberfläche 9 mit den Hydrokolloidkörnern 10 bedeckt. Die einzelnen Hydrokolloidkörner 10 bestehen vorzugsweise aus kaltwasserquellender und insbesondere kaltwasserlöslicher Stärke oder Hydroxyethylcellulose oder Carboxymethylcellulose oder Methylhydroxyethylcellulose und/oder Xanthan. Vorzugsweise ist das Hydrokolloid zudem ebenfalls anquellverzögert. Anquellverzögerung bedeutet, dass nach Mischung des Hydrokolloids mit Wasser noch eine gewisse Zeit vergeht, bis das Hydrokolloid, dann aber möglichst schlagartig, die Viskosität des Gemisches erhöht.

Die erfindungsgemäße Herstellung des Hygienegranulats erfolgt folgendermaßen:

Zunächst werden die einzelnen festen Bestandteile der Zwischenschicht 5, also das Calciumsilikathydratmehl, die mehlförmige Stärke (=Stärkemehl) und das von Stärke verschiedene, mehlförmige Hydrokolloid (=Hydrokolloidmehl) trocken in einem Chargenmischer vorgemischt. Die Herstellung erfolgt also im Batchbetrieb. Vorzugsweise weist ein Anteil von mindestens 95 M.-% des Stärkemehls eine Korngröße < 100 µm, bevorzugt < 25 µm nach DIN EN 933/1 auf. Das Stärkemehl ist also sehr feinteilig. Und das von Stärke verschiedene Hydrokolloid weist vorzugsweise eine Korngröße ≤ 500 µm, bevorzug ≤ 125 µm auf.

Nach dem trockenen Vormischen wird unter kontinuierlichem Mischen Wasser dazu gegeben und das Ganze zu einer Schlämme bzw. Suspension vermischt. Die Menge an Zugabewasser beträgt vorzugsweise 60 bis 150 M.-%, bevorzugt 70 bis 130 M.-%, bezogen auf die Trockenmasse der Suspension. Die Stärke und das von Stärke verschiedene Hydrokolloid beginnen zu quellen und sich gegebenfalls zu lösen und bilden das, zunächst wässrige, Gel bzw. die, zunächst wässrige, Gelmatrix 16, in der die Calciumsilikathydratkörner 14 des Calciumsilikathydratmehls verteilt sind.

Zu der Suspension werden anschließend gleichzeitig das Bentonitmehl 4 und ein Granulat aus den Trägerkörnern 2 zugegeben und derart untergemischt, dass die Trägerkörner 2 von der Suspension vollständig ummantelt werden. Die Suspension wird auf die Trägerkörner 2 aufgezogen. Die Granulatfeuchte des Granulats der Trägerkörner 2 beträgt vorzugsweise ≤ 40 M.%, bevorzugt ≤ 30 M.%. Da das Bentonitmehl 4 und die Trägerkörner 2 gleichzeitig zugegeben werden, lagert sich das Bentonitmehl teilweise an der Trägerkornoberfläche 3 ab, wird dort flächig angedrückt und dringt teilweise in die Poren 12 der Trägerkörner 2 ein (siehe Fig. 1), bevor die Trägerkörner 2 mit der Suspension ummantelt werden. Es bilden sich somit erste, einzelne Vorstufengranalien aus jeweils einem Trägerkorn 2, welches an der Trägerkornoberfläche 3 Bentonitmehl 4 aufweist, wobei das Trägerkorn 2 und das Bentonitmehl 4 mit der Suspension ummantelt sind. Die Suspension bildet nach Trocknung die spätere Zwischenschicht 5.

Anschließend, also nach dem Aufziehen der Suspension auf die Trägerkörner 2 und nach der Bildung der ersten Vorstufengranalien, wird in den Chargenmischer zu den ersten Vorstufengranalien ein weiteres Hydokolloidmehl, insbesondere Stärkemehl, zugegeben. Das Hydokolloidmehl weist vorzugsweise eine Korngröße ≤ 500 µm, bevorzugt ≤ 200 µm nach DIN EN 933/1 auf. Durch das fortschreitende Mischen binden die Körner des Hydokolloidmehls, insbesondere des Stärkemehls, Wasser aus der Suspension, quellen und bilden das, zunächst wässrige, Hydrokolloidgel 7, insbesondere Stärkegel, welches sich an der Zwischenschichtoberfläche 6 der einzelnen ersten Vorstufengranalien ablagert, auf dieser verschmiert wird und in diese eingedrückt wird. Es bilden sich zweite Vorstufengranalien aus jeweils einem Trägerkorn 2, welches an der Trägerkornoberfläche 3 das Bentonitmehl 4 aufweist, wobei das Trägerkorn 2 und das Bentonitmehl 4 mit der Zwischenschicht 5 ummantelt sind, wobei auf der Zwischenschichtoberfläche 6 das wässrige Hydrokolloidgel 7 angeordnet sind.

Danach werden gleichzeitig das Calciumsilikathydratmehl und das Bentonitmehl zur Bildung der Außenmantelschicht 8 in den laufenden Chargenmischer zu den zweiten Vorstufengranalien zugegeben. Durch Mischen der zweiten Vorstufengranalien mit dem Calciumsilikathydratmehl und dem Bentonitmehl werden die zweiten Vorstufengranalien mit einer Mischung aus dem Calciumsilikathydratmehl und dem Bentonitmehl ummantelt. Da die einzelnen zweiten Vorstufengranalien beim Mischen aneinander stoßen, werden das Calciumsilikathydratmehl und das Bentonitmehl vermischt und zusammengedrückt bzw. agglomeriert bzw. kompaktiert. Es bildet sich die Bindemittelmatrix 18 aus Bentonitmehl aus, in die die Calciumsilikathydratkörner 15 eingebettet sind. Zudem werden das Bentonitmehl und das Calciumsilikathydratmehl in das wässrige Hydrokolloidgel 7 eingedrückt. Das wässrige Hydrokolloidgel 7 verbindet somit die Zwischenschicht 5 und die Außenmantelschicht 8 miteinander.

Es bildet sich somit die Außenmantelschicht 8 aus den beiden miteinander vermischten und agglomerierten Feststoffen, nämlich dem Calciumsilikathydratmehl und dem Bentonitmehl, aus. Es bilden sich dritte Vorstufengranalien aus jeweils einem Trägerkorn 2, wobei das Trägerkorn 2 mit der Zwischenschicht 5 ummantelt ist und zwischen der Zwischenschicht 5 und dem Trägerkorn 2 das Bentonitmehl 4 angeordnet sind und wobei die Zwischenschicht 5 mit der Außenmantelschicht 8 ummantelt ist und zwischen der Zwischenschicht 5 und der Außenmantelschicht 8 das Hydrokolloidgel 7 angeordnet sind.

Anschließend wird ein weiteres mehlförmiges, kaltwasserquellendes, insbesondere kaltwasserlösliches, Hydrokolloid (=Hydrokolloidmehl) aus den Hydrokolloidkörnern 10, zu den dritten Vorstufengranalien zugemischt. Das Hydrokolloidmehl weist vorzugsweise eine Korngröße ≤500 µm, bevorzugt ≤125 µm nach DIN EN 933/1 auf. Durch das kontinuierliche Mischen lagern sich die einzelnen Hydrokolloidkörner 10 des Hydrokolloidmehls jeweils an der Manteloberfläche 9 der einzelnen dritten Vorstufengranalien ab und werden jeweils etwas in die Außenmantelschicht 8 eingedrückt. Es bilden sich die erfindungsgemäßen, allerdings noch ungetrockneten Granalien 1.

Danach wird das hergestellte Hygienegranulat, insbesondere auf eine Restfeuchte von < 15 bis < 5 M.%, getrocknet. Dabei trocknen auch jeweils die wässrigen Gele zumindest teilweise.

Bei der erfindungsgemäßen Herstellung des Hygienegranulats kommt es dabei sowohl auf die einzelnen Materialien an sich, als auch auf die Reihenfolge der einzelnen Verfahrensschritte und die Anteile der jeweiligen Materialien bezogen auf die gesamte Feststoffzugabe an. Bevorzugte Zusammensetzungen sind in nachstehender Tabelle angegeben:

| | **Anteil bezogen auf die Feststoffzugabe [M.-%]** | |
|---|---|---|
| | | vorzugsweise |
| **Granulat aus Trägerkörnern, insbesondere aus Calciumsilikathydratmaterial** | 20 bis 70 | 30 bis 60 |
| **Bentonitmehl oder Superabsorber (zugegeben zusammen mit Trägerkörnern)** | 0,2 bis 5 | 0,5 bis 3 |
| **Calciumsilikathydratmehl für Suspension** | 15 bis 65 | 20 bis 50 |
| **Stärkemehl für Suspension** | 0,5 bis 5 | 1 bis 4 |
| **Hydrokolloidmehl für Suspension** | 0,1 bis 5 | 1 bis 4 |
| **Stärkemehl für Zwischenschichtoberfläche** | 0,1 bis 5 | 0,1 bis 2 |
| **Bentonitmehl für Außenmantelschicht** | 10 bis 25 | 15 bis 25 |
| **Calciumsilikathydratmehl für Außenmantelschicht** | 2 bis 10 | 3 bis 8 |
| **Hydrokolloidmehl für Manteloberfläche** | 0,1 bis 10 | 0,1 bis 5 |

Ein bevorzugtes Ausführungsbeispiel wurde wie folgt in einem Chargenmischer hergestellt (Die Mengenangaben beziehen sich auf die gesamte Feststoffzugabe):
1. Trockenes Vormischen von 23,9 M.-% produktionsfeuchtem Calciumsilikathydratmehl + 1,9 M.-% Stärkemehl + 0,7 M.-% Hydroxyethylcellulose,
2. Vermischen der vorgemischten Komponenten mit 20 M.-% Wasser (bezogen auf die Gesamttrockeneinwaage) zu einer Suspension,
3. Gleichzeitige Zugabe von 43 M.-% Calciumsilikathydratgranulat und 1,1 M.-% Bentonitmehl zu der Suspension,
4. Nach Granulation, Zugabe von 0,7 M.-% Stärkemehl,
5. Zugabe von 22,3 M.-% Bentonitmehl + 6 M.-% Calciumsilikathydratmehl
6. Nach Bildung einer Außenmantelschicht, Zugabe von 0,4 M.-% Hydroxyethylcellulose,
7. Trocknen der Granalien.

Das erfindungsgemäß hergestellte bzw. erfindungsgemäße Hygienegranulat weist sehr gute Verklumpungseigenschaften bei geringer Schüttdichte auf. Vorzugsweise weist das erfindungsgemäß hergestellte bzw. erfindungsgemäße Hygienegranulat eine Schüttdichte von < 800 kg/dm³, bevorzugt < 600 kg/dm³ auf. Die geringe Schüttdichte wird einerseits durch das poröse Trägerkorn und andererseits durch den Anteil an Calciumsilikathydratmehl sowohl in der Zwischenschicht als auch in der Außenmantelschicht erreicht. Denn Calciumsilikathydratmehl ist aufgrund seiner Mikroporosität deutlich leichter als Bentonit. Auch die Stärke und das Hydrokolloid tragen zur geringen Schüttdichte bei. Denn sowohl die Stärke als auch das Hydrokolloid führen zur Verklumpung. Aufgrund dessen konnte der Anteil an Bentonit in dem erfindungsgemäßen Hygienegranulat reduziert werden und dadurch die Schüttdichte deutlich gesenkt werden.

Für die hervorragenden Verklumpungseigenschaften der Hygienestreu sorgen zum einen der Bentonit in der Außenmantelschicht als auch die Stärke und das Hydrokolloid. Bei Flüssigkeitszutritt quellen zunächst der in der Außenmantelschicht vorhandene Bentonit und, etwas verzögert, das auf der Manteloberfläche vorhandene Hydrokolloid. Beides führt zu einer sofortigen Verklumpung der Granalien untereinander. Sobald die Flüssigkeit an die Zwischenschicht vorgedrungen ist, quellen auch das in dieser enthaltene Gel aus Hydrokolloid und Stärke sowie die das Hydrokolloidgel, insbesondere Stärkegel, an der Zwischenschichtoberfläche. Die Stärke und das Hydrokolloid werden dabei klebrig und verbessern einerseits den Zusammenhalt der einzelnen Schichten der Granalien und andererseits der Klumpen, also der einzelnen Granalien miteinander. Das heißt, die klebrige Zwischenschicht gewährleistet, dass die Außenmantelschicht einer Granalie an der Granalie haften bleibt und sich nicht ablöst. Dadurch, dass die Zwischenschicht allerdings nicht nur aus Stärke- und Hydrokolloidgel besteht, sondern auch noch das Calciumsilikathydratmehl enthalten ist, werden die Granalien allerdings nicht zu klebrig. Somit wird verhindert, dass die Granalien im Fell der Tiere, insbesondere der Katzen, hängen bleiben.

Gleichzeitig weist das erfindungsgemäße Hygienegranulat eine sehr hohe Wasseraufnahme auf. Vorzugsweise weist das Hygienegranulat eine Wasseraufnahme von > 100 M.%, bevorzugt ≥ 150 M.% nach Westinghouse auf. Die hohe Wasseraufnahme wird insbesondere ebenfalls durch das Vorhandensein des Calciumsilikathydratmehls sowohl in der Zwischenschicht als auch in der Außenmantelschicht erreicht. Denn die einzelnen Mehlkörner des Calciumsilikathydratmehls quellen im Gegensatz zu dem Bentonit, dem Hydrokolloid und der Stärke bei Wasserzutritt nicht. Dadurch wird verhindert, dass die Außenmantelschicht und/oder die Zwischenschicht durch das Quellen eine Barriere bilden, durch die keine Flüssigkeit mehr an das Trägerkorn vordringen kann. Denn die einzelnen Mehlkörner des Calciumsilikathydratmehls weisen Mikroporen auf und gewährleisten dadurch, dass die Flüssigkeit durch die Außenmantelschicht und die Zwischenschicht bis an das Trägerkorn vordringen kann und von diesem aufgenommen werden kann. Zudem weisen Bentonit als auch die Stärke und das Hydrokolloid eine sehr hohe Quellfähigkeit auf und tragen ebenfalls zu der hohen Wasseraufnahme des erfindungsgemäßen Hygienegranulats bei.

Außerdem weist das erfindungsgemäße bzw. erfindungsgemäß hergestellte Hygienegranulat eine hohe Abriebfestigkeit und Verbundfestigkeit auf. Insbesondere die Stärke in der Zwischenschicht als auch das Hydrokolloidgel an der Zwischenschichtoberfläche verbessert die Verbundfestigkeit. Denn das Stärkegel weist auch nach dem Trocknen noch eine gewisse Klebrigkeit auf und verbessert somit den Verbund der Außenmantelschicht mit dem Trägerkorn. Die Zwischenschicht ist somit eine Haftvermittlungsschicht. Aufgrund dessen verbessern auch das an der Zwischenschichtoberfläche vorhandene Hydrokolloidgel den Verbund bzw. Zusammenhalt der einzelnen Granalien. Insbesondere ist das Hydrokolloidgel sowohl mit der Zwischenschicht als auch mit der Außenmantelschicht verbunden, insbesondere verklebt.

Für die gute Abriebfestigkeit sorgt insbesondere auch das Hydrokolloid an der Manteloberfläche. Insbesondere ist es von Vorteil, wenn es sich bei dem Hydrokolloid um Hydroxyethylcellulose handelt. Denn diese wird nach dem Austrocknen hart wie Kunststoff und verbessert dadurch die Abriebfestigkeit der einzelnen Granalien deutlich. Vorzugsweise liegt die Abriebfestigkeit bei < 0,5 %, bevorzugt < 0,3 %, bestimmt mit dem Abriebtester TAR 120 von ERWEKA bei 60 U/Min sowie einer Zeit von 5 Min.

Auch bezüglich des Herstellungsverfahrens wurde eine erfinderische Auswahl der einzelnen Verfahrensschritte und der einzelnen Materialien getroffen. Beispielsweise wurde im Rahmen der Erfindung herausgefunden, dass bei zu hoher Granulatfeuchte der Trägerkörner die Verklumpung der hergestellten Hygienestreu deutlich schlechter ist. Überraschenderweise reicht aber schon eine geringe Menge an Bentonitmehl bzw. Superabsorbermehl, welches gleichzeitig mit dem Granulat aus Trägerkörnern zugegeben wird, aus, um das Verklumpungsverhalten deutlich zu verbessern. Das Bentonitmehl bzw. Superabsorbermehl bindet offenbar überschüssige Feuchte aus den Trägerkörnern. Somit können insbesondere Schwankungen der Granulatfeuchte problemlos ausgeglichen werden. Bzw. das Herstellungsverfahren ist nicht anfällig für Schwankungen der Granulatfeuchte. Dennoch liegt es im Rahmen der Erfindung, das Granulat zuvor zu trocknen.

Des Weiteren wurde im Rahmen der Erfindung herausgefunden, dass der Anteil an Stärke, die der Schlämme bzw. Suspension zugegeben wird begrenzt werden sollte. Denn ein zu hoher Stärkeanteil führt dazu, dass die Suspension zu zähflüssig und zu klebrig wird, so dass eine Granulierung erschwert bis unmöglich wird. Um aber dennoch einen guten Verbund von Außenmantelschicht und Trägerkorn zu erreichen, wird gemäß einem bevorzugten Aspekt der Erfindung Stärke auf die Zwischenschichtoberfläche aufgebracht bzw. zwischen der Zwischenschicht und der Außenmantelschicht vorgesehen. Die Stärke quillt etwas und bildet Stärkegel, so dass das Bentonitmehl und das Calciumsilikathydratmehl der Außenmantelschicht in das Stärkegel eingedrückt werden und mit diesen verkleben. Zudem bleibt das Stärkegel auch nach dem Austrocknen klebrig und sorgt für einen guten Verbund. Überraschenderweise reicht dabei eine geringe Menge an Stärke aus.

Vorteilhaft ist auch die Verwendung eines anquellverzögerten Hydrokolloids für die Suspension, da dieses bei der Herstellung nicht vollständig quillt, sondern erst bei Verwendung des Hygienegranulats.

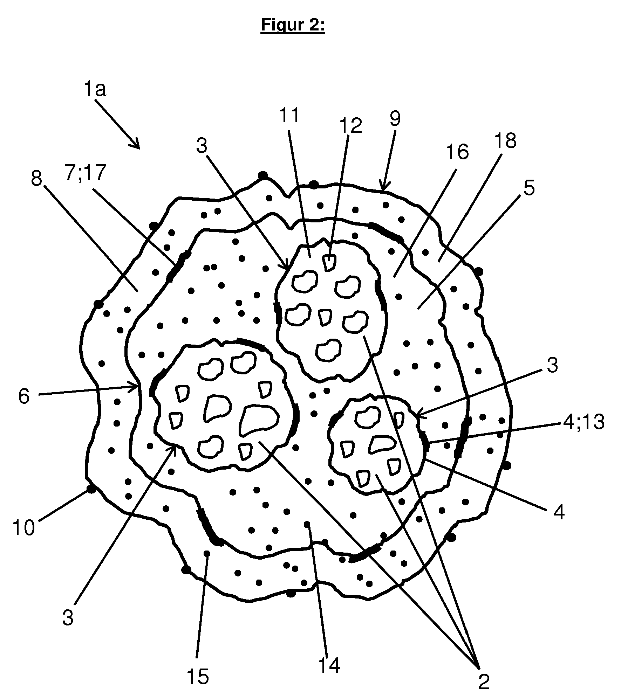

Es liegt dabei auch im Rahmen der Erfindung, dass eine Granalie 1 a mehrere Trägerkörner 2 aufweist (siehe Fig. 2). Dies lässt sich bei der Herstellung nicht verhindern. Die Trägerkörner 2 mit dem darauf angeordneten Bentonitmehl 4 sind dann von der Zwischenschicht 5 umhüllt. Ansonsten ist der Aufbau der Granalie 1 a gleich.

Zudem liegt es im Rahmen der Erfindung, dass die Außenmantelschicht Duftstoffe enthält.

## Patentansprüche

1. Klumpenbildendes Hygienegranulat, insbesondere Tierstreu, bevorzugt Katzenstreu, wobei das Hygienegranulat eine Vielzahl von einzelnen Granalien (1;1a) aufweist, wobei eine Granalie (1;1a) jeweils aufweist:
a) Zumindest ein inneres Trägerkorn (2) aus einem porösen, mineralischen, nicht quellenden Trägermaterial,
b) eine das Trägerkorn (2) oder die Trägerkörner (2) ummantelnde Zwischenschicht (5), die aus einem Gemisch besteht, welches zumindest ein Mehl eines nicht quellenden, mineralischen, porösen Materials, insbesondere Calciumsilikathydratmehl, und eine Gelmatrix (16) aus zumindest kaltwasserquellender, insbesondere kaltwasserlöslicher, Stärke und einem von Stärke verschiedenen, kaltwasserquellenden, insbesondere kaltwasserlöslichen, Hydrokolloid enthält,
c) zwischen dem Trägerkorn (2) oder den Trägerkörnern (2) und der Zwischenschicht (5) angeordnetes Bentonitmehl (4) oder Superabsorber,
d) eine die Zwischenschicht (5) umhüllende Außenmantelschicht (8) mit einer Mantelschichtoberfläche (9), wobei die Außenmantelschicht (8) aus einem Gemisch besteht, welches zumindest ein Mehl eines nicht quellenden, mineralischen, porösen Materials, insbesondere Calcium-silikathydratmehl, und Bentonitmehl enthält, und
e) zwischen der Außenmantelschicht (8) und der Zwischenschicht (5) angeordnetes kaltwasserquellendes, insbesondere kaltwasserlösliches, Hydrokolloidgel (7), insbesondere Stärkegel,
f) auf der Mantelschichtoberfläche (9) verteilt angeordnete Hydrokolloidkörner (10) eines kaltwasserquellenden, insbesondere kaltwasserlöslichen, Hydrokolloids.

2. Hygienegranulat nach Anspruch 1,
**dadurch gekennzeichnet, dass**
es sich bei dem Trägermaterial um poröses, insbesondere hydrothermal gehärtetes, Calciumsilikathydratmaterial, bevorzugt um Poren- und/oder Schaumbetonmaterial handelt.

3. Hygienegranulat nach Anspruch 1 oder 2,
**dadurch gekennzeichnet, dass**
ein Trägerkorn (2) jeweils eine äußere Kornoberfläche (3) aufweist, wobei das zwischen dem jeweiligen Trägerkorn (2) und der Zwischenschicht (5) angeordnete Bentonitmehl (4) auf der Kornoberfläche (3) verteilt angeordnet ist, insbesondere in Form von Materialagglomeraten (13).

4. Hygienegranulat nach einem der vorhergehenden Ansprüche,
**dadurch gekennzeichnet, dass**
Körner (14) des Mehls des nicht quellenden, mineralischen, porösen Materials, insbesondere des Calciumsilikathydratmehls, in die Gelmatrix (16) eingebettet sind.

5. Hygienegranulat nach einem der vorhergehenden Ansprüche,
**dadurch gekennzeichnet, dass**
das zwischen dem jeweiligen Trägerkorn (2) und der Zwischenschicht (5) angeordnete Bentonitmehl (4) eine Korngröße ≤ 200 µm, bevorzugt ≤100 µm nach DIN EN 933/1 aufweist.

6. Hygienegranulat nach einem der vorhergehenden Ansprüche,
**dadurch gekennzeichnet, dass**
die Trägerkörner (2) eine Korngröße ≤ 6 mm, bevorzugt ≤ 4 mm nach DIN EN 933/1 aufweisen.

7. Hygienegranulat nach einem der vorhergehenden Ansprüche,
**dadurch gekennzeichnet, dass**
das Mehl des nicht quellenden, mineralischen, porösen Materials, insbesondere das Calciumsilikathydratmehl der Zwischenschicht (5) eine Korngröße ≤ 1000 µm, bevorzugt ≤ 300 µm nach DIN EN 933/1 aufweist.

8. Hygienegranulat nach einem der vorhergehenden Ansprüche,
**dadurch gekennzeichnet, dass**
es sich bei dem von Stärke verschiedenen Hydrokolloid um Hydroxyethylcellulose und/oder Carboxymethylcellulose und/oder Methylhydroxyethylcellulose und/oder Xanthan handelt.

9. Hygienegranulat nach einem der vorhergehenden Ansprüche,
**dadurch gekennzeichnet, dass**
das von Stärke verschiedene Hydrokolloid anquellverzögert ist.

10. Hygienegranulat nach einem der vorhergehenden Ansprüche,
**dadurch gekennzeichnet, dass**
das Calciumsilikathydratmehl der Außenmantelschicht (8) eine Korngröße ≤ 1000 µm, bevorzugt ≤ 300 µm nach DIN EN 933/1 aufweist.

11. Hygienegranulat nach einem der vorhergehenden Ansprüche,
**dadurch gekennzeichnet, dass**
das Bentonitmehl der Außenmantelschicht (8) eine Korngröße ≤ 200 µm, bevorzugt ≤ 100 µm nach DIN EN 933/1 aufweist.

12. Hygienegranulat nach einem der vorhergehenden Ansprüche,
**dadurch gekennzeichnet, dass**
die Hydrokolloidkörner (10) aus Stärke oder Hydroxyethylcellulose oder Carboxymethylcellulose oder Methylhydroxyethylcellulose und/oder Xanthan bestehen.

13. Hygienegranulat nach einem der vorhergehenden Ansprüche,
**dadurch gekennzeichnet, dass**
das Hygienegranulat eine Schüttdichte von < 800 kg/dm³, bevorzugt < 600 kg/dm³ aufweist.

14. Hygienegranulat nach einem der vorhergehenden Ansprüche,
**dadurch gekennzeichnet, dass**
das Hygienegranulat eine Restfeuchte von < 15 M.-%, bevorzugt < 5 M.-% aufweist.

15. Hygienegranulat nach einem der vorhergehenden Ansprüche,
**dadurch gekennzeichnet, dass**
das Hygienegranulat eine Wasseraufnahme von > 100 M.-%, bevorzugt ≥ 150 M.-% nach Westinghouse aufweist.

16. Verfahren zur Herstellung eines klumpenbildenden Hygienegranulats mit einer Vielzahl von Granalien (1;1a) aus jeweils zumindest einem Trägerkorn (2) aus einem porösen, mineralischen, nicht quellenden Trägermaterial und einer das Trägerkorn (2) oder die Trägerkörner umhüllenden, mehrschichtigen Ummantelung, vorzugsweise zur Herstellung einer Tierstreu, bevorzugt einer Katzenstreu, insbesondere zur Herstellung eines Hygienegranulats nach einem der vorhergehenden Ansprüche, in einem in Chargenbetrieb betriebenen Mischer mit folgenden aufeinanderfolgenden Verfahrensschritten:
a) Herstellung einer Suspension aus Wasser, einem Mehl eines nicht quellenden, mineralischen, porösen Materials, insbesondere Calcium-silikathydratmehl, Stärkemehl und einem mehlförmigen, von Stärke verschiedenen Hydrokolloid,
b) Gleichzeitige Zugabe eines Granulats aus den Trägerkörnern (2) und von Bentonitmehl (4) und/oder einem Superabsorber in den Mischer,
c) Zugabe eines weiteren Hydrokolloidmehls, insbesondere von Stärkemehl, in den Mischer,
d) Gleichzeitige Zugabe von Bentonitmehl und Calciumsilikathydratmehl in den Mischer,
e) Zugabe eines weiteren Hydrokolloidmehls in den Mischer,
f) Trocknen der hergestellten Granalien (1;1a).

17. Verfahren nach Anspruch 16,
**dadurch gekennzeichnet, dass**
zunächst die festen Bestandteile der Suspension trocken vorgemischt werden und anschließend das Zugabewasser zugegeben wird.

18. Verfahren nach Anspruch 16 oder 17,
**dadurch gekennzeichnet, dass**
die Trägerkörner und das gleichzeitig zugegebene Bentonitmehl derart mit der Suspension gemischt werden, dass erste einzelne Vorstufengranalien aus mit der Suspension ummantelten Trägerkörnern (2) gebildet werden, wobei vorzugsweise das Hydrokolloidmehl derart zu den ersten Vorstufengranalien zugemischt wird, dass die Hydrokolloidkörner Wasser aus der Suspension aufnehmen, quellen und Hydrokolloidgel bilden, welches sich an der Oberfläche der ersten Vorstufengranalien ablagert und sich zweite Vorstufengranalien bilden, wobei vorzugsweise das Bentonitmehl und das Calciumsilikathydratmehl derart zu den zweiten Vorstufengranalien zugemischt werden, dass die zweiten Vorstufengranalien damit ummantelt werden.

19. Verfahren nach einem der Ansprüche 16 bis 18,
**gekennzeichnet durch**
folgende Anteile der einzelnen festen Bestandteile des Hygienegranulats:
| | **Anteil bezogen auf die Feststoffzugabe [M.-%]** | |
|---|---|---|
| | | vorzugsweise |
| **Granulat aus Trägerkörnern, insbesondere aus Calciumsilikathydratmaterial** | 20 bis 70 | 30 bis 60 |
| **Bentonitmehl oder Superabsorber (zugegeben zusammen mit Trägerkörnern)** | 0,2 bis 5 | 0,5 bis 3 |
| **Calciumsilikathydratmehl für Suspension** | 15 bis 65 | 20 bis 50 |
| **Stärkemehl für Suspension** | 0,5 bis 5 | 1 bis 4 |
| **Hydrokolloidmehl für Suspension** | 0,1 bis 5 | 1 bis 4 |
| **Stärkemehl für Zwischenschichtoberfläche** | 0,1 bis 5 | 0,1 bis 2 |
| **Bentonitmehl für Außenmantelschicht** | 10 bis 25 | 15 bis 25 |
| **Calciumsilikathydratmehl für Außenmantelschicht** | 2 bis 10 | 3 bis 8 |
| **Hydrokolloidmehl für Manteloberfläche** | 0,1 bis 10 | 0,1 bis 5 |

## Claims

1. A clump-forming granular hygiene material, in particular animal litter, preferably cat litter, wherein the granular hygiene material comprises a plurality of individual granules (1; 1a), wherein each granule (1; 1a) comprises:
(a) at least one inner carrier grain (2) composed of a porous, mineral, non-swelling carrier material,
(b) an intermediate layer (5) enveloping the carrier grain (2) or carrier grains (2), said layer consisting of a mixture that contains at least a powder of a non-swelling, mineral, porous material, in particular calcium silicate hydrate powder, and a gel matrix (16) composed at least of starch that swells in cold water and in particular is soluble in cold water and a hydrocolloid other than starch that swells in cold water and in particular is soluble in cold water,
(c) bentonite powder (4) or superabsorbent polymer disposed between the carrier grain (2) or carrier grains (2) and the intermediate layer (5),
(d) an outer shell layer (8) encapsulating the intermediate layer (5), having a shell layer surface (9), wherein the outer shell layer (8) consists of a mixture that contains at least a powder of a non-swelling, mineral, porous material, in particular calcium silicate hydrate powder, and bentonite powder, and
(e) a hydrocolloid gel (7) that swells in cold water, and in particular that is soluble in cold water, disposed between the outer shell layer (8) and the intermediate layer (5), in particular starch gel,
(f) hydrocolloid grains (10) of a hydrocolloid that swells in cold water, and in particular that is soluble in cold water, distributed over the shell layer surface (9).

2. The granular hygiene material according to claim 1,
**characterised in that**
the carrier material is porous, in particular hydrothermally hardened, calcium silicate hydrate material, preferably autoclaved aerated and/or foamed concrete material.

3. The granular hygiene material according to claim 1 or 2,
**characterised in that**
each carrier grain (2) has an outer grain surface (3), wherein the bentonite powder (4) disposed between the respective carrier grain (2) and the intermediate layer (5) is distributed on the grain surface (3), in particular in the form of material agglomerates (13).

4. The granular hygiene material according to one of the preceding claims,
**characterised in that**
grains (14) of the powder of the non-swelling, mineral, porous material, in particular the calcium silicate hydrate powder, are embedded in the gel matrix (16).

5. The granular hygiene material according to one of the preceding claims,
**characterised in that**
the bentonite powder (4) disposed between the respective carrier grain (2) and the intermediate layer (5) has a grain size ≤ 200 µm, preferably ≤ 100 µm according to DIN EN 933/1.

6. The granular hygiene material according to one of the preceding claims,
**characterised in that**
the carrier grains (2) have a grain size ≤ 6 mm, preferably ≤ 4 mm according to DIN EN 933/1.

7. The granular hygiene material according to one of the preceding claims,
**characterised in that**
the powder of the non-swelling, mineral, porous material, in particular the calcium silicate hydrate powder of the intermediate layer (5) has a grain size ≤ 1000 µm, preferably ≤ 300 µm, according to DIN EN 933/1.

8. The granular hygiene material according to one of the preceding claims,
**characterised in that**
the hydrocolloid other than starch is hydroxyethyl cellulose and/or carboxymethyl cellulose and/or methyl hydroxyethyl cellulose and/or xanthan.

9. The granular hygiene material according to one of the preceding claims,
**characterised in that**
the hydrocolloid other than starch has delayed swelling.

10. The granular hygiene material according to one of the preceding claims,
**characterised in that**
the calcium silicate hydrate powder of the outer shell layer (8) has a grain size ≤ 1000 µm, preferably ≤ 300 µm according to DIN EN 933/1.

11. The granular hygiene material according to one of the preceding claims,
**characterised in that**
the bentonite powder of the outer shell layer (8) has a grain size ≤ 200 µm, preferably ≤ 100 µm according to DIN EN 933/1.

12. The granular hygiene material according to one of the preceding claims,
**characterised in that**
the hydrocolloid grains (10) consist of starch or hydroxyethyl cellulose or carboxymethyl cellulose or methyl hydroxyethyl cellulose and/or xanthan.

13. The granular hygiene material according to one of the preceding claims,
**characterised in that**
the granular hygiene material has a bulk density of < 800 kg/dm³, preferably < 600 kg/dm³.

14. The granular hygiene material according to one of the preceding claims,
**characterised in that**
the granular hygiene material has a residual moisture content of < 15 mass %, preferably < 5 mass %.

15. The granular hygiene material according to one of the preceding claims,
**characterised in that**
the granular hygiene material has a water absorption of >100 mass %, preferably ≥ 150 mass %, according to Westinghouse.

16. A method for producing a clump-forming granular hygiene material comprising a plurality of granules (1; 1a) each composed of at least a carrier grain (2) composed of a porous, mineral, non-swelling carrier material and a multilayer shell encapsulating the carrier grain (2) or carrier grains, preferably for the production of an animal litter, preferably a cat litter, in particular for the production of a granular hygiene material according to one of the preceding claims, in a mixer operated in batch operation, having the following consecutive process steps:
(a) producing a suspension composed of water, a powder of a non-swelling, mineral, porous material, in particular calcium silicate hydrate powder, starch powder and a powdered hydrocolloid other than starch,
(b) adding a granular material composed of the carrier grains (2) into the mixer simultaneously with bentonite powder (4) and/or a superabsorbent polymer,
(c) adding a further hydrocolloid powder, in particular starch powder, into the mixer,
(d) adding bentonite powder and calcium silicate hydrate powder into the mixer simultaneously,
(e) adding a further hydrocolloid powder into the mixer,
(f) drying the granules (1; 1 a) produced.

17. The method according to claim 16,
**characterised in that**
the solid components of the suspension are first pre-mixed in a dry state and then the mixing water is added.

18. The method according to claim 16 or 17,
**characterised in that**
the carrier grains and the simultaneously added bentonite powder are mixed with the suspension in such a manner that individual first precursor granules composed of carrier grains (2) enveloped with the suspension are formed, the hydrocolloid powder preferably being mixed into the first precursor granules in such a manner that the hydrocolloid grains absorb water from the suspension, swell and form a hydrocolloid gel, which deposits on the surface of the first precursor granules and second precursor granules form, the bentonite powder and the calcium silicate hydrate powder preferably being admixed to the second precursor granules in such a manner that the second precursor granules are enveloped therewith.

19. The method according to one of claims 16 to 18,
**characterised by**
the following proportions of the individual solid components of the granular hygiene material:
| | **Proportion based on added solids [mass %]** | |
|---|---|---|
| | | preferably |
| **Granular material composed of carrier grains, particularly calcium silicate hydrate material** | 20 to 70 | 30 to 60 |
| **Bentonite powder or superabsorbent polymer (added together with carrier grains)** | 0.2 to 5 | 0.5 to 3 |
| **Calcium silicate hydrate powder for suspension** | 15 to 65 | 20 to 50 |
| **Starch powder for suspension** | 0.5 to 5 | 1 to 4 |
| **Hydrocolloid powder for suspension** | 0.1 to 5 | 1 to 4 |
| **Starch powder for intermediate layer surface** | 0.1 to 5 | 0.1 to 2 |
| **Bentonite powder for outer shell layer** | 10 to 25 | 15 to 25 |
| **Calcium silicate hydrate powder for outer shell layer** | 2 to 10 | 3 to 8 |
| **Hydrocolloid powder for shell surface** | 0.1 to 10 | 0.1 to 5 |

## Revendications

1. Granulés hygiéniques formant des conglomérats, en particulier de la litière, de préférence de la litière pour chats, dans lesquels les granulés hygiéniques présentent une pluralité de diverses grenailles (1 ; 1a), sachant dans lesquels un type de grenailles (1 ; 1a) présente respectivement :
a) au moins un grain de support (2) intérieur composé d'un matériau de support poreux, minéral, ne gonflant pas,
b) une couche intermédiaire (5) enveloppant le grain de support (2) ou les grains de support (2), laquelle est constituée d'un mélange, qui contient au moins une farine d'un matériau ne gonflant pas, minéral, poreux, en particulier une farine de silicate de calcium hydraté, et une matrice de gel (16) composée d'au moins un amidon gonflant à l'eau froide, en particulier soluble dans l'eau froide, et d'un hydrocolloïde, différent de l'amidon, gonflant à l'eau froide, en particulier soluble dans l'eau froide,
c) de la farine de bentonite (4) ou un super absorbant disposé(e) entre le grain de support (2) ou les grains de support (2) et la couche intermédiaire (5),
d) une couche enveloppante extérieure (8) enveloppant la couche intermédiaire (5), pourvue d'une surface de couche enveloppante (9), dans lequels la couche enveloppante extérieure (8) est constituée d'un mélange, qui contient au moins une farine d'un matériau ne gonflant pas, minéral, poreux, en particulier une farine de silicate de calcium hydraté, et une farine de bentonite, et
e) un gel hydrocolloïde (7), en particulier un gel d'amidon, disposé entre la couche enveloppante extérieure (8) et la couche intermédiaire (5), gonflant à l'eau froide, en particulier soluble dans l'eau froide,
f) des grains d'hydrocolloïde (10), disposés de manière répartie sur la surface de couche enveloppante (9), d'un hydrocolloïde gonflant à l'eau froide, en particulier soluble dans l'eau froide.

2. Granulés hygiéniques selon la revendication 1,
**caractérisés en ce que**
le matériau de support est un matériau de silicate de calcium hydraté poreux, en particulier durci de manière hydrothermale, de préférence un matériau en béton poreux et/ou alvéolaire.

3. Granulés hygiéniques selon la revendication 1 ou 2,
**caractérisés en ce que**
un grain de support (2) présente respectivement une surface de grain (3) extérieure, dans lesquels la farine de bentonite (4) disposée entre le grain de support (2) respectif et la couche intermédiaire (5) est disposée de manière répartie sur la surface de grain (3), en particulier sous la forme d'agglomérats de matériau (13).

4. Granulés hygiéniques selon l'une quelconque des revendications précédentes,
**caractérisés en ce que**
des grains (14) de la farine du matériau ne gonflant pas, minéral, poreux, en particulier de la farine de silicate de calcium hydraté, sont incorporés dans la matrice de gel (16).

5. Granulés hygiéniques selon l'une quelconque des revendications précédentes,
**caractérisés en ce que**
de la farine de bentonite (4) disposée entre le grain de support (2) respectif et la couche intermédiaire (5) présente une granulométrie ≤ 200 µm, de manière préférée ≤ 100 µm, selon la norme DIN EN 933/1.

6. Granulés hygiéniques selon l'une quelconque des revendications précédentes,
**caractérisés en ce que**
les grains de support (2) présentent une granulométrie ≤ 6 mm, de manière préférée ≤ 4 mm selon la norme DIN EN 933/1.

7. Granulés hygiéniques selon l'une quelconque des revendications précédentes,
**caractérisés en ce que**
la farine du matériau ne gonflant pas, minéral, poreux, en particulier la farine de silicate de calcium hydraté de la couche intermédiaire (5), présente une granulométrie ≤ 1 000 µm, de manière préférée ≤ 300 µm selon la norme DIN EN 933/1.

8. Granulés hygiéniques selon l'une quelconque des revendications précédentes,
**caractérisés en ce que**
l'hydrocolloïde différent de l'amidon est une hydroxyéthylcellulose et/ou une carboxyméthylcellulose et/ou une méthylhydroxyéthylcellulose et/ou de la gomme de xanthane.

9. Granulés hygiéniques selon l'une quelconque des revendications précédentes,
**caractérisés en ce que**
l'hydrocolloïde différent de l'amidon est à gonflement retardé.

10. Granulés hygiéniques selon l'une quelconque des revendications précédentes,
**caractérisés en ce que**
la farine de silicate de calcium hydraté de la couche enveloppante extérieure (8) présente une granulométrie ≤ 1 000 µm, de manière préférée ≤ 300 µm selon la norme DIN EN 933/1.

11. Granulés hygiéniques selon l'une quelconque des revendications précédentes,
**caractérisés en ce que**
la farine de bentonite de la couche enveloppante extérieure (8) présente une granulométrie ≤ 200, de préférence ≤ 100 µm selon la norme DIN EN 933/1.

12. Granulés hygiéniques selon l'une quelconque des revendications précédentes,
**caractérisés en ce que**
les grains d'hydrocolloïde (10) sont constitués d'amidon ou d'hydroxyéthylcellulose ou de carboxyméthylcellulose ou de méthylhydroxyéthylcellulose ou et/ou de gomme de xanthane.

13. Granulés hygiéniques selon l'une quelconque des revendications précédentes,
**caractérisés en ce que**
les granulés hygiéniques présentent une masse volumique apparente < 800 kg/dm³, de manière préférée < 600 kg/dm³.

14. Granulés hygiéniques selon l'une quelconque des revendications précédentes,
**caractérisés en ce que**
les granulés hygiéniques présentent une humidité résiduelle < 15 % M., de préférence < 5 %. M.

15. Granulés hygiéniques selon l'une quelconque des revendications précédentes,
**caractérisés en ce que**
les granulés hygiéniques présente une absorption d'eau > 100 % M., de préférence ≥ 150 % M selon Westinghouse.

16. Procédé permettant de fabriquer des granulés hygiéniques formant des conglomérats comprenant une pluralité de granules (1 ; 1a) composés de respectivement au moins une graine de support (2) composée d'un matériau de support poreux, minéral, ne gonflant pas et d'une enveloppe multicouche enveloppant la graine de support (2) ou les graines de support, servant à fabriquer de préférence de la litière, de manière préférée de la litière pour chats, en particulier servant à fabriquer des granulés hygiéniques selon l'une quelconque des revendications précédentes, dans un mélangeur fonctionnant dans un mode de lots, comprenant des étapes de procédé consécutives qui suivent :
a) la fabrication d'une suspension à partir d'eau, d'une farine d'un matériau ne gonflant pas, minéral, poreux, en particulier d'une farine de silicate de calcium hydraté, d'une farine d'amidon et d'un hydrocolloïde sous forme de farine, différent de l'amidon ;
b) l'ajout simultané de granulés composés de grains de support (2) et de farine de bentonite (4) et/ou d'un super absorbant dans le mélangeur ;
c) l'ajout d'une autre farine d'hydrocolloïde, en particulier de farine d'amidon, dans le mélangeur,
d) l'ajout simultané de farine de bentonite et de farine de silicate de calcium hydraté dans le mélangeur,
e) l'ajout d'une autre farine d'hydrocolloïde dans le mélangeur ;
f) le séchage des grenailles (1 ; 1a) fabriquées.

17. Procédé selon la revendication 16,
**caractérisé en ce que**
dans un premier temps les constituants solides de la suspension sont préalablement mélangés à sec, et **en ce qu'**immédiatement après l'eau d'ajout est ajoutée.

18. Procédé selon la revendication 16 ou 17,
**caractérisé en ce que**
les grains de support et la farine de bentonite ajoutée dans le même temps sont mélangés à la suspension de telle manière que des premières grenailles préliminaires diverses sont formées à partir de grains de support (2) enveloppés de la suspension, dans lequel de préférence la farine d'hydrocolloïde est ajoutée et mélangée aux premières grenailles préliminaires de telle manière que les grains d'hydrocolloïde absorbent l'eau provenant de la suspension, gonflent et forment le gel d'hydrocolloïde, lequel se dépose au niveau de la surface des premières grenailles préliminaires et dans lequel des deuxièmes grenailles préliminaires se forment, dans lequel de préférence la farine de bentonite et la farine de silicate de calcium hydraté sont ajoutées et mélangées aux deuxièmes grenailles préliminaires de telle manière que les deuxièmes grenailles préliminaires sont ce faisant enveloppées.

19. Procédé selon l'une quelconque des revendications 16 à 18,
**caractérisé par**
des fractions suivantes des divers constituants solides des granulés hygiéniques :
| | Fraction rapportée à l'addition de substances solides [% M.] | |
|---|---|---|
| | | De préférence |
| Granulés composés de grains de support, en particulier d'un matériau de silicate de calcium hydraté | 20 à 70 | 30 à 60 |
| Farine de bentonite ou super absorbant (ajouté(e) conjointement aux grains de support) | 0,2 à 5 | 0,5 à 3 |
| Farine de silicate de calcium hydratée pour une suspension | 15 à 65 | 20 à 50 |
| Farine d'amidon pour suspension | 0,5 à 5 | 1 à 4 |
| Farine d'hydrocolloïde pour suspension | 0,1 à 5 | 1 à 4 |
| Farine d'amidon pour surface de couche intermédiaire | 0,1 à 5 | 0,1 à 2 |
| Farine de bentonite pour couche enveloppante extérieure | 10 à 25 | 15 à 25 |
| Farine de silicate de calcium hydraté pour couche enveloppante extérieure | 2 à 10 | 3à8 |
| Farine d'hydrocolloïde pour surface enveloppante | 0,1 à 10 | 0,1 à 5 |
